# EUROPEAN PATENT APPLICATION

(11) **EP 4 760 879 A1**
(43) Date of publication of application: **17.06.2026**
(21) Application number: 25779320.8
(22) Date of filing: 11.03.2025
(51) Int. Cl.: H01M 10/6556, H01M 10/613, H01M 10/658, H01M 10/6567, H01M 10/625

(54) **BATTERY PACK AND VEHICLE COMPRISING SAME**

(30) Priority: 29.03.2024 KR 20240043228
(71) Applicant: LG Energy Solution, Ltd., Seoul 07335 (KR)
(72) Inventor: JUNG, Kitaek, Daejeon 34122 (KR); LEE, Gi Hwan, Daejeon 34122 (KR)
(74) Representative: BCKIP Part mbB
(86) International application number: PCT/KR2025/003146
(87) International publication number: WO 2025/206619

(57) **Abstract**

A battery pack according to one embodiment of the present invention comprises: at least one battery module including a plurality of battery cells; a base plate supporting the battery module from the bottom thereof; a pack housing which is coupled to the base plate and which covers a side portion of the battery module; a first heat sink which is positioned below the base plate and in which a first flow path through which a coolant flows is formed; and a second heat sink which covers the upper portion of the battery module and in which a second flow path through which the coolant flows is formed.

## Description

### [TECHNICAL FIELD]

The present disclosure relates to a battery pack and a vehicle including the same.

### [BACKGROUND ART]

A secondary battery, unlike a primary battery, refers to a rechargeable battery, and is applied not only to portable devices but also to electrically driven vehicles such as electric vehicles (EVs) and hybrid electric vehicles (HEVs) that are powered by electrical drive sources.

Currently, widely used types of secondary batteries include lithium ion batteries, lithium polymer batteries, nickel cadmium batteries, nickel hydride batteries, nickel zinc batteries, and others. The operating voltage of a unit secondary battery cell such as, for example, a unit battery cell, ranges from approximately 2.5 V to 4.6 V. Therefore, when a voltage higher than the output voltage of the unit cell battery is required, multiple battery cells are connected in series and/or in parallel to constitute a battery pack. Accordingly, the number of battery cells included in the battery pack may be set in various ways based on the required output voltage or charge/discharge capacity.

When constituting a battery pack by connecting multiple battery cells in series/parallel, it is common to first configure at least one battery module including at least one battery cell or multiple battery cells, and then, add other components to complete the battery pack. Here, a battery module refers to a component in which multiple battery cells are connected in series or in parallel, while a battery pack refers to a component in which multiple battery modules are connected in series or in parallel to enhance the capacity and output thereof. A battery pack constituted with multiple battery modules as described above may experience abnormal phenomena such as thermal runaway. In order to prepare for such cases, various safety measures have been devised and are being developed.

### [DETAILED DESCRIPTION OF INVENTION]

### [TECHNICAL PROBLEMS]

The present disclosure provides a battery pack capable of controlling the temperature of the battery pack to a predetermined temperature or lower in case of a thermal event occurring within the battery pack.

In another aspect, the present disclosure improves the heat dissipation effects of a battery pack.

In yet another aspect, the present disclosure prevents or suppresses structural collapse of a battery pack.

However, the technical problems to be solved by the present disclosure are not limited to the above-described problems, and other problems not mentioned will be clearly understood by those skilled in the art from the following description of the disclosure.

### [TECHNICAL SOLUTION]

According to one embodiment of the present disclosure, a battery pack includes at least one battery module including a plurality of battery cells, a base plate that supports the battery module from below, a pack housing that is coupled to the base plate and covers a lateral side of the battery module, a first heat sink that is positioned on one side of the base plate and has a first flow path formed therein, through which a cooling liquid flows, and a second heat sink that covers an upper side of the battery module and has a second flow path formed therein, through which the cooling liquid flows.

In one aspect of the present disclosure, the first heat sink is disposed at a lower side of the base plate.

In one aspect of the present disclosure, the second heat sink is coupled to an upper side of the pack housing to cover an upper side of the battery module.

In one aspect of the present disclosure, the first heat sink may be joined to a lower side of the base plate.

In another aspect of the present disclosure, the first flow path may be formed by a space between the base plate and the first heat sink.

In still another aspect of the present disclosure, the second heat sink may include a metallic material.

In one aspect of the present disclosure, the second flow path formed in the second heat sink may be structured to penetrate an inside of the second heat sink.

In another aspect of the present disclosure, the second heat sink and the second flow path formed inside the second heat sink may be manufactured by extrusion molding.

In another aspect of the present disclosure, a plurality of second flow paths, each of which is interconnected, may be formed inside the second heat sink manufactured by extrusion molding.

In still another aspect of the present disclosure, the second heat sink may include a second inlet that is provided at one end of the second flow path and allows the cooling liquid to flow in, and a second outlet that is provided at a remaining end of the second flow path and allows the cooling liquid to flow out.

In one aspect of the present disclosure, the cooling liquid flowing inside the first heat sink and the second heat sink may be enabled to circulate.

In another aspect of the present disclosure, the battery pack may further include a fire-resistant sheet interposed between the second heat sink and the battery module.

The fire-resistant sheet may include a fire-resistant material.

For example, the fire-resistant sheet may include at least one of HPI, FRB, and Mica.

In still another aspect of the present disclosure, the fire-resistant sheet may directly block a flame generated inside the battery pack, preventing the generated flame from reaching the second heat sink.

In one aspect of the present disclosure, the battery pack may further include cooling port assemblies connected to the second inlet and the second outlet, respectivley.

In addition, the present disclosure provides a vehicle including at least one battery pack according to the above-described embodiment.

According to one embodiment of the present disclosure, a battery pack case includes a base plate that supports a battery module from below, a pack housing that is coupled to the base plate and covers a lateral side of the battery module, and a pack lid that covers the battery module and has a second flow path formed therein, through which a cooling liquid flows.

The battery pack case further includes a first heat sink that is positioned on one side of the base plate and has a first flow path formed therein, through which the cooling liquid flows.

The second flow path formed in the pack lid may be structured to penetrate an inside of the pack lid and may be manufactured by extrusion molding.

### [EFFECT OF INVENTION]

According to the present disclosure, it is possible to control the temperature of a battery pack to a predetermined temperature or lower in case of a thermal event occurring within the battery pack.

Further, according to the present disclosure, it is possible to enhance the heat dissipation effects of a battery pack.

Furthermore, according to the present disclosure, it is possible to prevent or suppress structural collapse of a battery pack.

The effects obtainable through the present disclosure are not limited to the above-described effects, and other technical effects not mentioned will be clearly understood by those skilled in the art from the following description of the disclosure.

### BRIEF DESCRIPTION OF THE DRAWINGS

The following drawings attached hereto illustrate embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 is a diagram illustrating a battery pack according to one embodiment of the present disclosure.
FIG. 2 is an exploded perspective view of FIG. 1.
FIG. 3 is a schematic front view of the battery pack according to one embodiment of the present disclosure.
FIG. 4 is a diagram illustrating the structure of a base plate and a first heat sink according to one embodiment of the present disclosure.
FIG. 5 is a diagram illustrating the structure of a second heat sink according to one embodiment of the present disclosure.
FIG. 6 is a diagram illustrating the structure of the second heat sink according to another embodiment of the present disclosure.
FIG. 7 is a diagram illustrating the structure of the second heat sink and a fire-resistant sheet according to one embodiment of the present disclosure.
FIG. 8 is a diagram illustrating the structure of the second heat sink and the fire-resistant sheet according to another embodiment of the present disclosure.
FIG. 9 is a diagram illustrating a cooling process of the battery pack in the event of a fire within the battery pack according to one embodiment of the present disclosure.
FIG. 10 is a diagram illustrating a vehicle including the battery pack according to one embodiment of the present disclosure.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### [MODE FOR CARRYING OUT THE INVENTION]

The advantages and features of the present disclosure as well as methods for achieving them will become apparent by referring to embodiments described below in conjunction with the accompanying drawings. However, the present disclosure is not limited to the embodiments disclosed below and may be implemented in various different forms. These embodiments are provided merely to ensure a complete understanding of the present disclosure and to inform those skilled in the art of the scope of the present disclosure, which is defined solely by the scope of the claims. Accordingly, in some embodiments, well-known process steps, well-known device structures, and well-known techniques may not be described in detail to avoid ambiguity in interpreting the present disclosure. The same reference numerals refer to the same components throughout the specification.

To clearly illustrate multiple layers and regions in the drawings, thicknesses may be exaggerated. The same reference numerals are given to similar parts throughout the specification. When a part such as a layer, film, region, or plate is described as being "above" another part, this may include not only cases where it is "directly above" the other part, but also cases where there is another part in between. Conversely, when a part is described as being "directly above" another part, it may mean that there is no intervening part. Further, when a part such as a layer, film, region, or plate is described as being "below" another part, this may include not only cases where it is "directly below" the other part, but also cases where there is another part in between. Conversely, when a part is described as being "directly below" another part, it may mean that there is no intervening part.

A statement that two compared objects are the same refers to them being "substantially the same." Therefore, substantial sameness may include deviations considered minor in the art, such as deviations within 5%. Further, when a parameter is described as being uniform within a given area, it may mean uniformity from an average perspective.

Throughout the specification, each component may be singular or plural unless otherwise stated.

The phrase that an arbitrary structure is disposed on the "upper (or lower) side" of a component, or on the "top (or bottom)" of a component, may mean not only that the arbitrary structure is disposed in contact with the upper surface (or lower surface) of the component, but also that another structure may be interposed between the component and the arbitrary structure disposed on the (top or bottom) of the component.

Further, when a component is described as being "connected to," "coupled with," or "linked to" another component, it should be understood that the components may be directly connected or linked to each other, but other components may be "interposed" between the respective components, or each component may be "connected," "coupled," or "linked" through other components.

Throughout the specification, "A and/or B" means A, B, or both A and B, unless otherwise specifically stated. Similarly, "C to D" means values equal to or greater than C and equal to or less than D, unless otherwise specifically stated.

In recent battery packs used in automobiles, there has been an increasing need to control the maximum temperature on the exterior of a battery pack cover. For example, when a thermal runaway event occurs in a battery pack mounted in a vehicle, the temperature of the battery pack may become excessively high, or flames may escape to the exterior. Such situations may make it difficult for passengers in the vehicle to evacuate and may even pose a risk of injury.

The present disclosure provides a battery pack capable of controlling the temperature of the battery pack mounted in a vehicle to a predetermined temperature or lower, even in case of a thermal event occurring within the battery pack.

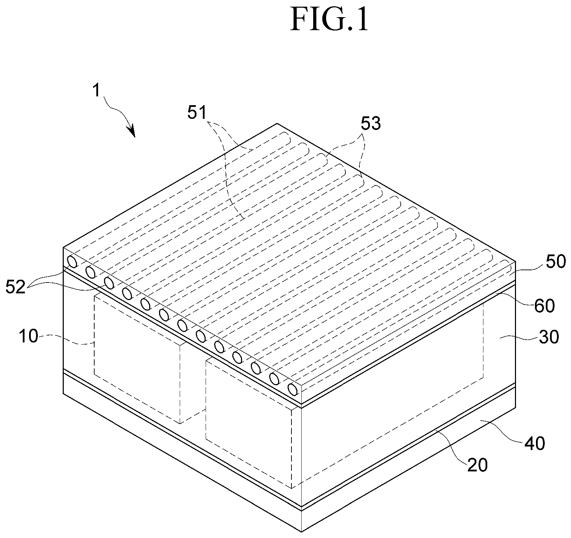

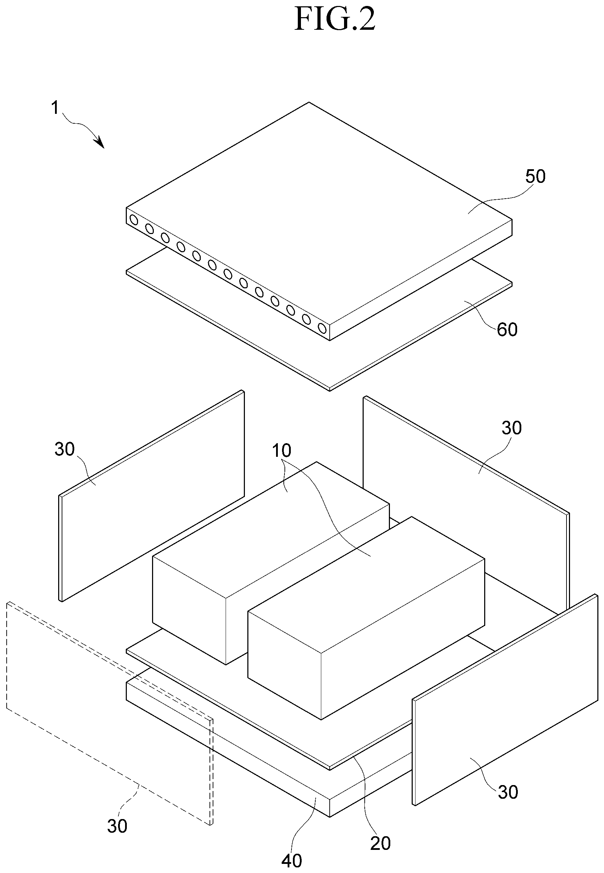

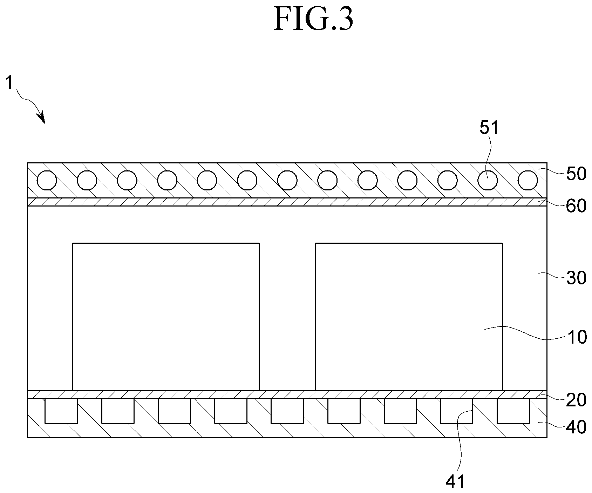

FIG. 1 is a diagram illustrating a battery pack 1 according to one embodiment of the present disclosure, and FIG. 2 is an exploded perspective view of FIG. 1. FIG. 3 is a schematic front view of the battery pack 1 according to one embodiment of the present disclosure.

Referring to FIGS. 1 to 3, the battery pack 1 includes at least one battery module 10, a base plate 20, a pack housing 30, a first heat sink 40, and a second heat sink 50 serving as a cover plate (pack lid). The battery pack 1 may further include a fire-resistant sheet 60 between the second heat sink 50 and the module 10.

The battery module 10 may include at least one battery cell (not illustrated). Here, the battery cell may be a secondary battery, which may be configured as a pouch-type secondary battery, a prismatic secondary battery, or a cylindrical secondary battery. For example, when a plurality of battery cells is configured as a pouch-type secondary battery, each battery cell may include an electrode lead at a front end and/or a rear end thereof, with a positive electrode lead at the front end and a negative electrode lead at the rear end. The plurality of battery cells may be arranged to be electrically connected to each other. For example, in one embodiment of the present disclosure, the plurality of battery cells may be stacked in one direction. However, the present disclosure is not limited to the above embodiment, and it goes without saying that other types of secondary batteries, such as cylindrical secondary batteries and prismatic secondary batteries, may also be applied to the present disclosure.

Although the present disclosure has described the embodiment in which the battery pack 1 includes the battery module 10 by way of example, a battery pack 1 that includes battery cells without the battery module 10 (*e.g.,* a cell-to-pack structure battery pack 1) may also be included within the scope of the present disclosure.

Referring back to FIGS. 1 to 3, the battery pack 1 may include the base plate 20 that supports the battery module 10 from below. The base plate 20 may be configured to have a plate shape which may be extending in substantially horizontal direction. The base plate 20 may serve as a base to support the battery module 10. For example, at least one battery module 10 may be mounted on the base plate 20. The base plate 20 may include a plastic material or a metallic material.

The battery pack 1 may include the pack housing 30. The pack housing 30 may be configured to cover the lateral side of at least one battery module 10. For example, the pack housing 30 may be configured to cover the periphery of at least one battery module 10 mounted on the base plate 20. The pack housing 30 may be configured to be coupled with the base plate 20. For example, the pack housing 30 may be mounted on the base plate 20. For example, the pack housing 30 may be mounted upright on the base plate 20 in a direction perpendicular to the base plate 20. The pack housing 30 may be mounted along the edge of the base plate 20. The pack housing 30 may be configured as a substantially vertical plane extending upward from the edge of the base plate 20. The pack housing 30 may be composed of, for example, a front cover, a right cover, a left cover, and a rear cover. The front cover, right cover, left cover, and rear cover of the pack housing 30 may exist as separate components that are coupled to each other. Alternatively, the front cover, right cover, left cover, and rear cover of the pack housing 30 may be formed integrally.

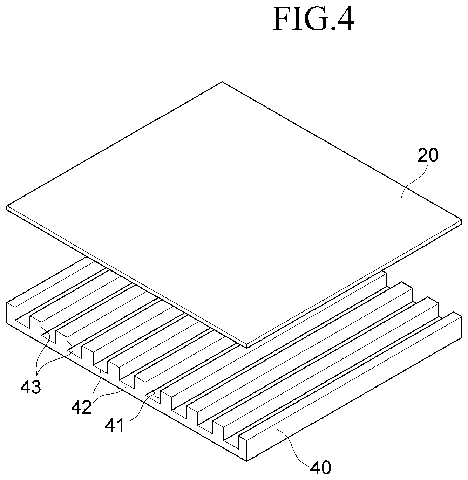

FIG. 4 is a diagram illustrating the structure of the base plate 20 and the first heat sink 40, according to one embodiment of the present disclosure.

Referring to FIGS. 3 and 4, the first heat sink 40 may be configured to release the heat generated from the battery cell and battery module 10 to the outside. The first heat sink 40 may be positioned at the lower side of the base plate 20. According to one embodiment, a first flow path 41 through which a cooling liquid flows may be formed inside the first heat sink 40. The cooling liquid may be, for example, cooling water or cooling oil. However, it goes without saying that the type of the cooling liquid of the present disclosure is not limited to these examples.

In one aspect of the present disclosure, a first inlet 42, which is configured to allow the cooling liquid to flow in, may be provided at one end of the first flow path 41. A first outlet 43, which is configured to allow the cooling liquid to flow out, may be provided at the other end of the first flow path 41. Thus, the cooling liquid may be introduced into the first inlet 42, flow through the first flow path 41, and then be discharged from the first heat sink 40 through the first outlet 43. During the process, the cooling liquid may effectively cool the battery module 10 mounted on the base plate 20.

In another aspect of the present disclosure, at least one first flow path 41 may be provided on the first heat sink 40. For smooth cooling of the battery pack 1, a plurality of first flow paths 41 may be provided. For example, referring to FIG. 4, the plurality of first flow paths 41 may be provided along the horizontal direction of the battery pack 1. In this case, the plurality of first flow paths 41 may be arranged in a parallel configuration.

With the structure described above, the cooling liquid flowing through the first flow path 41 may perform an indirect heat exchange with the battery module 10 through heat exchange with the base plate 20. For example, since the first heat sink 40 is positioned at the lower side of the base plate 20, it may effectively remove the heat generated from the lower side of the battery module 10 adjacent to the base plate 20, thereby enhancing the heat dissipation effects at the lower side of the battery module 10.

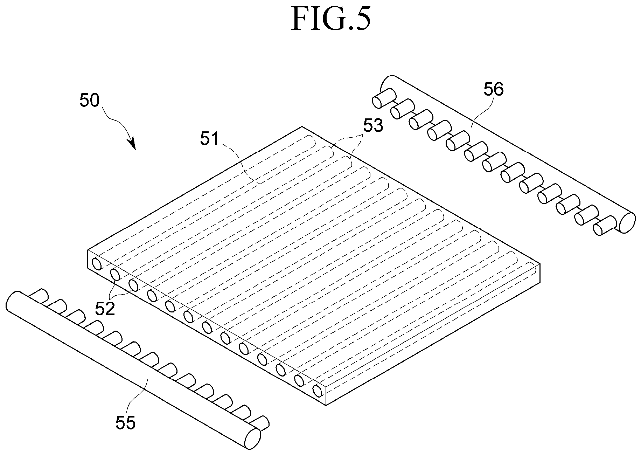

FIG. 5 is a diagram illustrating the structure of the second heat sink 50, which serves as a cover plate, according to one embodiment of the present disclosure.

Referring to FIGS. 3 and 5, the second heat sink 50 may be configured to release the heat generated from the battery cell and battery module 10 to the outside. According to one embodiment, the second heat sink 50 may be configured to cover the upper side of the battery module 10 as a cover plate. For example, the second heat sink 50 may function as an upper cover or upper lid of the battery pack 1. The second heat sink 50 may be configured to be coupled with the pack housing 30. For example, the second heat sink 50 may be seated on an upper end of the pack housing 30 to be coupled therewith. Further, the second heat sink 50 and the base plate 20 may be arranged in a parallel configuration, and the pack housing 30 may be interposed between the second heat sink 50 and the base plate 20 to form a vertical structure perpendicular to both the second heat sink 50 and the base plate 20.

A second flow path 51, through which the cooling liquid flows, may be formed inside the second heat sink 50. The cooling liquid may be, for example, cooling water or cooling oil. However, it goes without saying that the type of the cooling liquid of the present disclosure is not limited to these examples.

In one aspect of the present disclosure, a second inlet 52, which is configured to allow the cooling liquid to flow in, may be provided at one end of the second flow path 51. A second outlet 53, which is configured to allow the cooling liquid to flow out, may be provided at the other end of the second flow path 51. Thus, the cooling liquid may be introduced into the second inlet 52, flow through the second flow path 51, and then be discharged from the second heat sink 50 through the second outlet 53. During the process, the cooling liquid may effectively cool the battery module 10 located at the lower side of the second heat sink 50.

In another aspect of the present disclosure, at least one second flow path 51 may be provided in the second heat sink 50. For smooth cooling of the battery pack 1, a plurality of second flow paths 51 may be provided. For example, referring to FIG. 5, the plurality of second flow paths 51 may be provided along the horizontal direction of the battery pack 1. In this case, the plurality of second flow paths 51 may be arranged in a parallel configuration. The second flow path 51 may be formed integrally inside a plate body constituting the second heat sink 50 as a through-hole extending from the second inlet 52 to the second outlet 53. The second flow path 51 may be, for example, linear in shape.

With the structure described above, the cooling liquid flowing through the second flow path 51 may perform a heat exchange with the battery module 10 located at the lower side of the second heat sink 50. Since the second heat sink 50 is positioned at the upper side of the battery module 10, the heat generated at the upper side of the battery module 10 adjacent to the second heat sink 50 may be effectively removed. For example, the second heat sink 50 may enhance the heat dissipation effects at the upper side of the battery module 10. Therefore, with the structure, an additional heat sink provided at the upper side of the battery module 10 may effectively cool the high-temperature battery pack 1 from high-temperature venting gases and/or flames. For example, with the structure, even in case of a thermal event occurring within the battery pack 1, the maximum temperature may be maintained at or below approximately 300 °C to 400 °C.

In one aspect of the present disclosure, the cooling liquid flowing inside the first heat sink 40 and the second heat sink 50 may circulate.

For example, referring to FIGS. 3 and 4, the first heat sink 40 may include a plurality of first inlets 42 and a plurality of first outlets 43. In this case, the plurality of first inlets 42 may be connected to a cooling port assembly (not illustrated) that is configured to be connected to the first inlets 42. Further, the plurality of first outlets 43 may be connected to a cooling port assembly (not illustrated) that is configured to be connected to the first outlets 43. Thus, it may be possible to supply the cooling liquid from the outside through the cooling port assembly and simultaneously discharge the cooling liquid to the outside through the cooling port assembly. In this case, the cooling liquid discharged to the outside through the cooling port assembly may be re-cooled externally and then circulate back toward the first inlets 42.

The second heat sink 50 may include a plurality of second inlets 52 and a plurality of second outlets 53. In this case, the plurality of second inlets 52 may be connected to a cooling port assembly 55 that is configured to be connected to the second inlets 52. Further, the plurality of second outlets 53 may be connected to a cooling port assembly 56 that is configured to be connected to the second outlets 53. Thus, it may be possible to supply the cooling liquid from the outside through the cooling port assemblies 55,56 and simultaneously discharge the cooling liquid to the outside through the cooling port assemblies 55, 56. In this case, the cooling liquid discharged to the outside through the cooling port assemblies 55, 56 may be re-cooled externally and then circulate back toward the second inlets 52.

Referring to FIGS. 3 and 4, in one aspect of the present disclosure, the first heat sink 40 may be configured to be joined to the lower side of the base plate 20. For example, the first heat sink 40 may be configured to come into contact with and be coupled with a lower surface of the base plate 20. For example, an upper surface of the first heat sink 40 and the lower surface of the base plate 20 may be coupled with each other by welding. Alternatively, the upper surface of the first heat sink 40 and the lower surface of the base plate 20 may be coupled with each other by soldering. However, the method of coupling the upper surface of the first heat sink 40 with the lower surface of the base plate 20 is not limited to these methods, as long as it allows for the joining between the two components.

Referring to FIG. 4, in another aspect of the present disclosure, the first flow path 41 may be formed in the space between the base plate 20 and the first heat sink 40. For example, the first heat sink 40 may have a substantially plate shape with a predetermined groove formed on the upper surface thereof. In this case, when the upper surface of the first heat sink 40 comes into contact and is coupled with the lower surface of the base plate 20, the predetermined groove formed on the upper surface of the first heat sink 40 may function as the first flow path 41. According to one embodiment, as illustrated in FIG. 4, a groove having a substantially rectangular cross-section is formed on the upper surface of the first heat sink 40, but the cross-sectional shape of the groove is not limited to this example.

With the structure described above, since the cooling liquid is in direct contact with the base plate 20, the cooling efficiency may be further enhanced. For example, with the structure, the number of components interposed between the cooling liquid and the battery module 10 is reduced, leading to an additional improvement in cooling efficiency.

In another aspect of the present disclosure, the second heat sink 50 may include, for example, a metallic material.

Since the metallic material exhibits superior thermal conductivity compared to other materials, the second heat sink 50 itself may perform a heat dissipation function. For example, the second heat sink 50 may include steel or stainless steel. However, it goes without saying that the type of metal is not limited to these examples.

Referring back to FIGS. 3 and 5, the second heat sink 50 may include the plurality of second flow paths 51.

According to one embodiment, the second heat sink 50 may be configured to have the second flow path 51 that penetrates the inside of the second heat sink 50 by applying an extrusion molding method during manufacturing. For example, referring to FIG. 5, the second flow path 51 may be configured to penetrate the inside of the second heat sink 50 in an approximately cylindrical shape. According to the embodiment of FIG. 5, a plurality of cylindrical second flow paths 51 may be provided so as to be arranged parallel to each other. For example, the second flow path 51 may be configured to extend in the front-rear direction. While the cross-section of the second flow path 51 has been described in this embodiment as being approximately circular, but the cross-section of the second flow path 51 is not limited to this shape. The cross-section of the second heat path 51 of the present disclosure may take various shapes, such as rectangular or hexagonal, depending on the considerations for process convenience and optimization of heat dissipation effects.

By applying the extrusion molding method in manufacturing the second heat sink 50 as described above, the second heat sink 50 with the second heat path 51 integrally formed inside may be manufactured relatively easily compared to other manufacturing methods such as other molding methods and sheet metal methods. Moreover, when manufacturing a relatively large second heat sink 50 using the extrusion molding method, multiple smaller second heat sinks 50 may be manufactured and joined to each other, providing an advantage of manufacturing a larger second heat sink 50 in a relatively easy manner.

The present disclosure enables the manufacture of the plate-shaped second heat sink 50 with the second flow path 51 integrally formed inside by the extrusion molding method, allowing the second heat sink 50 itself to serve as an upper cover (pack lid). Thereby, the second heat sink 50 and the upper cover (pack lid) of the battery pack 1 may be manufactured as a single integrated unit without the need to manufacture the upper cover (pack lid) and the heat sink separately. For example, the second heat sink 50, configured in a plate shape with the second flow path 51 formed inside by the extrusion method, may function as an upper cover (pack lid) of the battery pack 1 having a heat dissipation function itself. Thus, the present disclosure reduces the volume of the battery pack 1 thereby allowing an increase in energy density.

Further, the second heat sink 50 manufactured to further function as an upper cover (pack lid) may reduce the size of the space between the cooling liquid and the battery module 10. Accordingly, the cooling efficiency of the battery module 10 may be enhanced.

Furthermore, the structure in which the second flow path 51 is formed by the extrusion molding method allows for a smoother formation of the flow path, improving manufacturing convenience. Moreover, with the structure in which the second flow path 51 is formed by the extrusion molding method, the second heat sink 50 may exist as a single structure manufactured in one extrusion molding process without requiring additional joining or coupling, unless the second heat sink 50 is manufactured by connecting a plurality of smaller second heat sinks 50. This may reduce the risk of damage or defects.

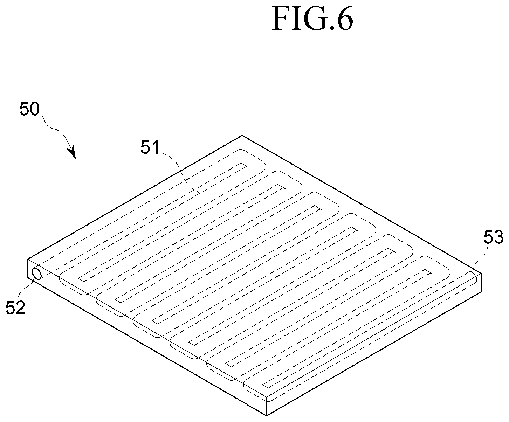

FIG. 6 is a diagram illustrating the structure of the second heat sink 50 according to another embodiment of the present disclosure.

Referring to FIG. 6, the second flow path 51 may be continuously formed inside the second heat sink 50. For example, in the embodiment of FIG. 6, the second inlet 52 and the second outlet 53 may be provided as a single pair. In other words, the second flow path 51 may be configured to extend from the second inlet 52 to the second outlet 53. In this case, the second flow path 51 may have, for example, a zigzag shape. According to one embodiment, the second flow path 51 may be extruded in a zigzag shape. For example, the second flow path 51 may be formed in a zig-zag shape inside the second heat sink 50 by applying an extrusion process to the plate itself that constitutes the second heat sink 50.

With the structure described above, the number of second inlets 52 and second outlets 53 is reduced, which, in turn, decreases the number of cooling port assemblies coupled to the second inlets 52 and the second outlets 53. Thus, a reduction in the number of components may not only lower manufacturing costs but also improve maintenance convenience, and may reduce the likelihood of defects.

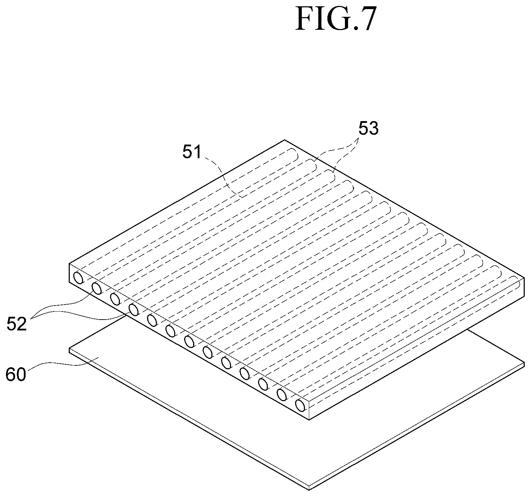

FIG. 7 is a diagram illustrating the structure of the second heat sink 50 and the fire-resistant sheet 60 according to one embodiment of the present disclosure.

Referring to FIGS. 1 to 3 and FIG. 7, the battery pack 1 may include the fire-resistant sheet 60.

The fire-resistant sheet 60 may be interposed between the second heat sink 50 and the battery module 10. The fire-resistant sheet 60 may be configured to cover a lower surface of the second heat sink 50. For example, the fire-resistant sheet 60 may be attached to the lower surface of the second heat sink 50. According to one embodiment, the lower surface of the second heat sink 50 and the fire-resistant sheet 60 may be bonded together using a thermal interface material (TIM). The thermal interface material may be, for example, at least one of a heat dissipative grease, a thermally conductive adhesive, and a phase change material. This configuration may further improve thermal conductivity, enhancing the heat dissipation effects by the second heat sink 50.

The fire-resistant sheet 60 may be configured as a plate shape extending in a horizontal direction. Alternatively, the fire-resistant sheet 60 may be configured as a sheet extending approximately parallel to the second heat sink 50.

Thus, according to the present disclosure, the fire-resistant sheet 60 may effectively protect the second heat sink 50. For example, with the structure in which the fire-resistant sheet 60 is disposed at the lower side of the second heat sink 50, the second heat sink 50 may be effectively protected by the fire-resistant sheet 60 in case of a thermal event occurring within the battery pack 1, thereby preventing or suppressing a structural collapse of the battery pack 1.

In one aspect of the present disclosure, the fire-resistant sheet 60 may include a fire-resistant material.

For example, the fire-resistant sheet 60 may include at least one of HPI, FRB, and Mica. By including a fire-resistant material in the fire-resistant sheet 60, the battery pack 1 of the present disclosure may effectively prevent or suppress structural collapse of the battery pack 1 due to high-temperature venting gases and/or flames.

With the structure described above, since the fire-resistant sheet 60 including the fire-resistant material entirely covers the lower surface of the second heat sink 50, it is possible to prevent or suppress the direct contact of high-temperature flames generated from a thermal event occurring within the battery pack 1 with the second heat sink 50. For example, according to the present disclosure, the fire-resistant sheet 60 may be configured to directly block flames occurring within the battery pack 1. Thus, a structural collapse of the second heat sink 50 and the pack housing 30 may be effectively prevented or suppressed.

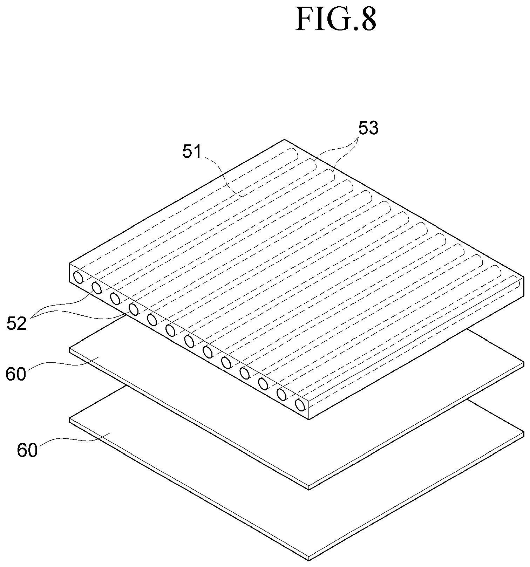

FIG. 8 is a diagram illustrating the structure of the second heat sink 50 and the fire-resistant sheet 60, according to another embodiment of the present disclosure.

Referring to FIG. 8, a plurality of fire-resistant sheets 60 may be provided.

For example, a first fire-resistant sheet 60 may be provided at the lower side of the second heat sink 50, and a second fire-resistant sheet 60 may be provided at the lower side of the first fire-resistant sheet 60. The compositions of the first fire-resistant sheet 60 and the second fire-resistant sheet 60 may be the same or may be different. In one embodiment, the first fire-resistant sheet 60 and the second fire-resistant sheet 60 may be configured to have different components. For example, the first fire-resistant sheet 60 may include an HPI material, and the second fire-resistant sheet 60 may include an FRB material. The arrangement may be reversed, for example, with the first fire-resistant sheet 60 including an FRB material and the second fire-resistant sheet 60 including an HPI material. Alternatively, it is also possible for the first fire-resistant sheet 60 to include both HPI and FRB materials.

The number of fire-resistant sheets 60 is not limited to two. For example, three or more fire-resistant sheets 60 may be provided.

With the structure including a plurality of fire-resistant sheets 60, it is possible to more effectively prevent or suppress the direct contact of high-temperature flames generated within the battery pack 1 with the second heat sink 50. Furthermore, when the fire-resistant sheets 60 made of different materials are stacked, the fire-resistant effects of each material may complement one another, thereby maximizing the fire-resistant effects.

In another aspect of the present disclosure, the fire-resistant sheet 60 may be additionally provided on the base plate 20.

For example, the fire-resistant sheet 60 may be attached to an upper surface of the base plate 20, which supports the battery module 10 from below. In this case, the upper surface of the base plate 20 and the fire-resistant sheet 60 may be bonded together using a thermal interface material (TIM). The thermal interface material may be, for example, at least one of a heat dissipative grease, a thermally conductive adhesive, and a phase change material. This configuration may further enhance thermal conductivity.

In this case, when the fire-resistant sheet 60 is additionally provided on the base plate 20, high-temperature flames generated from the battery module 10 may be effectively prevented or suppressed from damaging the base plate 20 and/or the first heat sink 40. For example, the fire-resistant sheet 60 may prevent or suppress the direct contact of flames with the base plate 20 and/or the first heat sink 40. This may effectively prevent or suppress a structural collapse of the base plate 20 and/or the first heat sink 40.

In another aspect of the present disclosure, the fire-resistant sheet 60 may be additionally provided on an inner surface of the pack housing 30.

For example, the fire-resistant sheet 60 may be attached to the inner surface of the pack housing 30. In this case, the inner surface of the pack housing 30 and the fire-resistant sheet 60 may be bonded together using a thermal interface material (TIM). The thermal interface material may be, for example, at least one of a heat dissipative grease, a thermally conductive adhesive, and a phase change material. This configuration may further enhance thermal conductivity.

When the fire-resistant sheet 60 is not provided on the inner surface of the pack housing 30, flames may be generated from the lateral side of the battery module 10 in case of a thermal event occurring on the lateral side of the battery module 10. In this case, the flames directly come into contact with the adjacent inner surface of the pack housing 30. Since the pack housing 30 is generally made of a resin rather than a metal, the direct contact of flames with the pack housing 30 may cause the pack housing 30 to melt, potentially leading to structural collapse of the battery pack 1.

However, with the structure of the present disclosure, the fire-resistant sheet 60 provided on the inner surface of the pack housing 30 may prevent or suppress the direct contact of high-temperature flames generated from the battery module 10 with the pack housing 30. Accordingly, the high-temperature flames generated from the battery module 10 are prevented or suppressed from damaging the pack housing 30. This may effectively prevent or suppress a structural collapse of the pack housing 30.

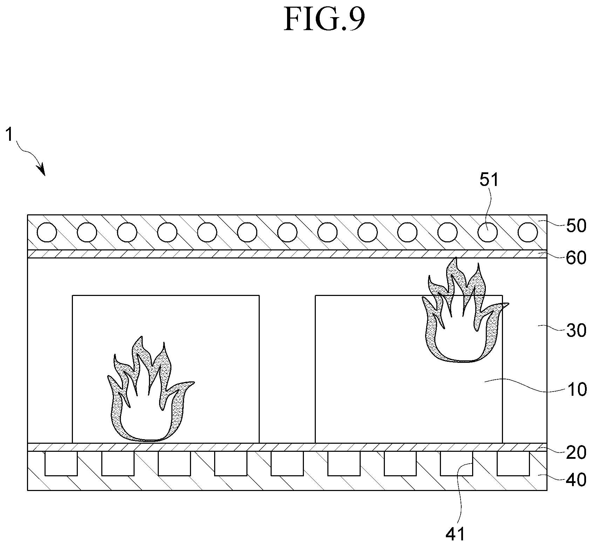

FIG. 9 is a diagram illustrating a cooling process of the battery pack 1 in the event of a fire within the battery pack 1, according to one embodiment of the present disclosure.

Referring to FIG. 9, the battery pack 1, according to one embodiment of the present disclosure, may include a plurality of battery modules 10 inside. The plurality of battery modules 10 may each include a battery cell assembly including a plurality of battery cells. The first heat sink 40 may be provided at the lower side of the battery pack 1 to cool the battery pack 1 from below. The second heat sink 50 may be provided at the upper side of the battery pack 1 to cool the battery pack 1 from above. The fire-resistant sheet 60 may be provided at the lower side of the second heat sink 50. For example, the fire-resistant sheet 60 may be interposed between the battery module 10 and the second heat sink 50.

Referring to FIG. 9, for example, a thermal event may occur at the lower side of the battery module 10 positioned on the left. In this case, the first heat sink 40 positioned at the lower side of the battery pack 1 may effectively suppress flames at a location adjacent to the flames. In this case, the first heat sink 40 may effectively lower the temperature of the lower side of the battery module 10.

Referring to FIG. 9, for example, a thermal event may occur at the upper side of the battery module 10 positioned on the right. In this case, the second heat sink 50 positioned at the upper side of the battery pack 1 may effectively suppress flames at a location adjacent to the flames. In this case, the second heat sink 50 may effectively lower the temperature of the upper side of the battery module 10.

With the structure of the present disclosure, cooling is achieved not only by the first heat sink 40 but also by the second heat sink 50, thereby implementing a dual cooling effect. For example, the second heat sink 50 may directly and efficiently cool the high-temperature venting gases and/or flames present at the lower side of the second heat sink 50. Thus, according to the present disclosure, the temperature of the battery pack 1 may be prevented or suppressed from excessively rising beyond a predetermined range during a fire event within the battery pack 1. For example, according to the present disclosure, the maximum temperature of the battery pack 1 may be maintained at or below approximately 300 °C to 400 °C.

Furthermore, since flames generally tend to rise, the lower surface of the second heat sink 50 positioned at the upper side may become vulnerable to flames. However, according to the present disclosure, the lower surface of the second heat sink 50 is protected by the fire-resistant sheet 60, which may effectively prevent or suppress a structural collapse of the second heat sink 50.

For the convenience of illustrations, certain components such as bus bars for electrical connections, cooling units, and power terminals are omitted from the drawings of the present disclosure. In addition, the battery pack 1 may further include various components of the battery pack 1 known at the time of filing of the present disclosure, such as a BMS, a pack case, a relay, a current sensor, and others.

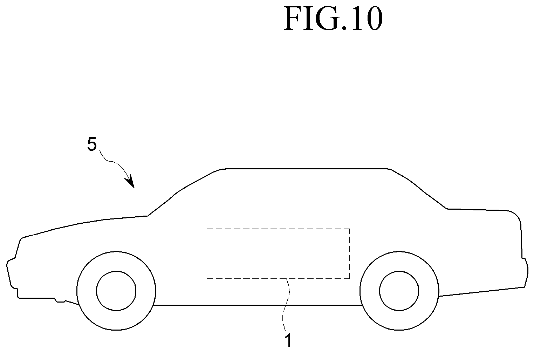

FIG. 10 is a diagram illustrating a vehicle including the battery pack 1 according to one embodiment of the present disclosure.

Referring to FIG. 10, a vehicle 5 according to one embodiment of the present disclosure may be, for example, an electric vehicle, a hybrid vehicle, or a plug-in hybrid vehicle, and includes the battery pack 1 according to one embodiment of the present disclosure. The vehicle 5 includes both a four-wheeled vehicle and a two-wheeled vehicle. The vehicle 5 operates upon receiving power from the battery pack 1 according to one embodiment of the present disclosure. Further, the vehicle 5, according to the present disclosure, may further include various other components included in vehicles, in addition to the battery cells or the battery pack 1. For example, the vehicle 5 according to the present disclosure may further include a vehicle body, a motor, and a control device such as an electronic control unit (ECU), in addition to the battery cells according to the present disclosure.

Meanwhile, in this specification, terms indicating directions such as "upper" and "lower" are used merely for the sake of convenience in description, but it will be apparent to those skilled in the art that these terms may vary depending on factors such as the position of a target object and the position of an observer.

Although the present disclosure has been described above in detail with reference to the limited embodiments and drawings, the present disclosure is not limited thereto, and various modifications and variations may be made by those skilled in the art within the technical idea of the present disclosure and the scope of equivalents of the patent claims described below.

### [INDUSTRIAL APPLICABILITY]

The present disclosure can provide a battery pack that can control the temperature of a battery pack to a predetermined temperature or lower in case of a thermal event occurring within the battery pack.

## Claims

1. A battery pack comprising:
at least one battery module each including a plurality of battery cells;
a base plate configured to support the battery module from below;
a pack housing coupled to the base plate and configured to cover a lateral side of the battery module;
a first heat sink positioned on one side of the base plate and having a first flow path formed therein, through which a cooling liquid flows; and
a second heat sink configured to cover the battery module and having a second flow path formed therein, through which the cooling liquid flows.

2. The battery pack according to claim 1, wherein the first heat sink is disposed at a lower side of the base plate.

3. The battery pack according to claim 1, wherein the second heat sink covers an upper side of the battery module.

4. The battery pack according to claim 1, wherein the first heat sink is configured to be joined to a lower side of the base plate.

5. The battery pack according to claim 1, wherein the first flow path is configured to be formed by a space formed between the base plate and the first heat sink.

6. The battery pack according to claim 1, wherein the second heat sink includes a metallic material.

7. The battery pack according to claim 1, wherein the second flow path formed in the second heat sink is configured to have a form penetrating an inside of the second heat sink.

8. The battery pack according to claim 1, wherein the second heat sink and the second flow path formed inside the second heat sink are manufactured by extrusion molding.

9. The battery pack according to claim 1, wherein a plurality of second flow paths, each of which is connected to each other, are formed inside the second heat sink manufactured by extrusion molding.

10. The battery pack according to claim 1, wherein the second heat sink includes:
a second inlet provided at one end of the second flow path and configured to allow the cooling liquid to flow in; and
a second outlet provided at the other end of the second flow path and configured to allow the cooling liquid to flow out.

11. The battery pack according to claim 1, wherein the cooling liquid flowing inside the first heat sink and the second heat sink is enabled to circulate.

12. The battery pack according to claim 1, further comprising a fire-resistant sheet interposed between the second heat sink and the battery module.

13. The battery pack according to claim 12, wherein the fire-resistant sheet includes a fire-resistant material.

14. The battery pack according to claim 12, wherein the fire-resistant sheet includes at least one of HPI, FRB, and Mica.

15. The battery pack according to claim 12, wherein the fire-resistant sheet is configured to directly block a flame generated inside the battery pack, preventing the generated flame from reaching the second heat sink.

16. The battery pack according to claim 10, further comprising cooling port assemblies configured to be connected to the second inlet and the second outlet, respectively.

17. A vehicle comprising at least one battery pack according to claim 1.

18. A battery pack case comprising:
a base plate configured to support a battery module from below;
a pack housing coupled to the base plate and configured to cover a lateral side of the battery module; and
a pack lid configured to cover the battery module and having a second flow path formed therein, through which a cooling liquid flows.

19. The battery pack case according to claim 18, further comprising a first heat sink positioned on one side of the base plate and having a first flow path formed therein, through which the cooling liquid flows.

20. The battery pack case according to claim 18, wherein the second flow path formed in the pack lid is configured to have a form penetrating an inside of the pack lid and is manufactured by extrusion molding.
